# EUROPEAN PATENT APPLICATION

(11) **EP 4 769 567 A1**
(43) Date of publication of application: **01.07.2026**
(21) Application number: 23949971.8
(22) Date of filing: 25.08.2023
(51) Int. Cl.: H01M 4/58, H01M 10/0525, B82Y 30/00, B82Y 40/00, C01B 25/45

(54) **LITHIUM IRON PHOSPHATE PRECURSOR, LITHIUM IRON PHOSPHATE MATERIAL, PREPARATION METHOD THEREFOR, AND USE THEREOF**

(71) Applicant: Shanghai Liangfu New Energy Technology Co., Ltd., Shanghai 201699 (CN)
(72) Inventor: YU, Xiaolin, Shanghai 201699 (CN)
(74) Representative: IK-IP LTD
(86) International application number: PCT/CN2023/114870
(87) International publication number: WO 2025/043375

(57) **Abstract**

Disclosed are a lithium iron phosphate precursor, a lithium iron phosphate material, a preparation method therefor, and a use thereof. The lithium iron phosphate material comprises a flower cluster structure, the flower cluster structure comprises secondary particles, and the secondary particles are formed by agglomerating primary particles by means of a coating layer, the material of the primary particles is lithium iron phosphate. The lithium iron phosphate material of the present invention has good electrochemical properties and processing properties when used in batteries.

## Description

### TECHNICAL FIELD

The present disclosure specifically relates to a lithium iron phosphate precursor, a lithium iron phosphate material, preparation methods therefor, and the use thereof.

### BACKGROUND ART

In recent years, new energy batteries such as lithium-ion batteries and sodium-ion batteries have developed rapidly. In particular, cathode materials for lithium-ion batteries have been widely studied, among which lithium iron phosphate (LiFePO₄) and lithium manganese iron phosphate (LiMnFePO₄) have received great attention. Especially lithium iron phosphate, due to its characteristics in terms of cycling performance, price, safety, specific energy, etc., has become the most attractive cathode material today.

Currently, the preparation processes adopted for industrialized lithium iron phosphate products are mainly liquid-phase method and solid-phase method, wherein the solid-phase method predominates. The liquid-phase method includes hydrothermal method, sol-gel method, solvent evaporation method, etc., and the solid-phase method includes high-temperature solid-phase method, carbothermal reduction method, spray pyrolysis method, etc. The liquid-phase method employs soluble raw materials to achieve molecular-level mixing, followed by crystallization under high temperature and high pressure conditions to prepare a nano-sized precursor; the solid-phase method mostly employs iron phosphate as a precursor, followed by physical blending and drying to prepare a lithium iron phosphate precursor. Lithium iron phosphate is prepared by sintering.

Liquid phase methods and solid-phase methods each have advantages and disadvantages. For example, lithium iron phosphate prepared by liquid-phase methods has uniform particle size, high specific capacity, and good cycling performance, but its processing properties are poor. The lithium iron phosphate prepared by the solid-phase method has good processing properties, but its cycling performance is poor and its specific capacity is low. Often, other properties are compensated for by sacrificing certain properties, making it impossible to simultaneously take into account both processing properties and electrochemical properties. For example, commonly used modification methods in the prior art include: doping, nano-sizing, and carbon coating. Nano-sizing helps to improve electrical properties, but is not conducive to improving processing properties. In the process of preparing the lithium iron phosphate precursor, the larger the sand grinding particle size, the better the processing properties of the corresponding finished lithium iron phosphate, and vice versa, the better the electrical properties. The lithium iron phosphate precursor prepared by Chinese Patent CN113896182A has a small sand grinding particle size and good electrochemical properties, but some processing properties are lost.

Therefore, how to prepare a lithium iron phosphate material that possesses both processing properties and electrochemical properties is a problem urgently to be solved in the field of cathode materials.

### SUMMARY OF THE INVENTION

The present disclosure mainly aims to overcome the defect that lithium iron phosphate materials in the prior art cannot simultaneously achieve both processing properties and electrochemical properties, and provides a lithium iron phosphate precursor, a lithium iron phosphate material, preparation methods therefor, and the use thereof. The lithium iron phosphate material of the present disclosure has good electrochemical properties and processing properties when used in batteries.

**The present disclosure provides a lithium iron phosphate material,** comprising a flower cluster structure, wherein the flower cluster structure comprises secondary particles, and the secondary particles are formed by agglomerating primary particles by means of a coating layer; the material of the primary particles is lithium iron phosphate.

In the present disclosure, the number of the primary particles contained in the secondary particles may be 2-512, preferably 10-450, such as 300, 400, or 450.

The method for determining the number of primary particles contained in the secondary particles in the present disclosure is to observe the number of primary particles on the surface by scanning electron microscopy, and to estimate the internal primary particles by statistically averaging the size of the primary particles on the surface. The number of primary particles contained in the secondary particles is the sum of the number of primary particles on the surface and the internal primary particles. According to the scanning electron microscope images, the D50 average value of the secondary particles and the D50 average value of the primary particles can be measured, and the number of primary particles in the secondary particles can be estimated based on the ratio of the cube of the D50 particle size of the secondary particles to the cube of the D50 of the primary particles.

In the present disclosure, the lithium iron phosphate material further comprises free primary particles, wherein the percentage of the number of the free primary particles to the "total number of the secondary particles and the free primary particles" is 0.1%-5%, preferably 0.1%-4.5%, more preferably 0.1%-3%, and further more preferably 0.1%-2%. The free primary particles refer to primary particles that are not agglomerated into secondary particles, and their number can be observed by scanning electron microscopy.

In the present disclosure, the coating layer can be understood as a layer that partially or completely covers the surface of the primary particles. The presence of the coating layer reduces the voids formed by the agglomeration of small particles, and lowers the specific surface area of the material, thereby reducing the surface energy of the material, which is beneficial for improving the processing properties of the lithium iron phosphate material.

In some embodiments, the raw material of the coating layer is a carbon material, and the thickness of the coating layer is 2-20 nm, for example, 4-5 nm.

In the present disclosure, the shape of the primary particles may be one or more of spherical, ellipsoidal, rod-shaped, flake-shaped and star-shaped.

In some embodiments, the primary particles are ellipsoidal, and the D50 of the primary particles is < 300 nm; the D90 of the primary particles is < 600 nm.

In some embodiments, in the primary particles, the proportion of primary particles with a particle size of 30 nm-140 nm is 50%, the proportion of primary particles with a particle size of 140 nm-200 nm is 37.76%, the proportion of primary particles with a particle size of 200 nm-270 nm is 7.14%, and the proportion of primary particles with a particle size of 270 nm-1000 nm is 5.1%.

In the present disclosure, the primary particles are nanoparticles, and the particle size of the primary particles is preferably 30 nm-1000 nm, more preferably 100 nm-800 nm, such as 150 nm or 200 nm.

In the present disclosure, the D50 of the primary particles may be 100 nm-300 nm, and preferably the average value of the D50 of the primary particles is 200 nm.

In the present disclosure, the crystallinity of the primary particles may be > 96%.

In the present disclosure, the D10 of the secondary particles may be ≥ 0.35 µm.

In the present disclosure, the D50 of the secondary particles may be 1-2.2 µm, and preferably the average value of the D50 of the secondary particles is 1.6 µm.

In the present disclosure, the D90 of the secondary particles may be ≤ 6.50 µm.

In the present disclosure, the D99 of the secondary particles is <≤ 12.50 µm.

In the present disclosure, the particle size distribution of the secondary particles may be unimodal, bimodal, or multimodal. When a laser particle size analyzer is used to determine the particle size distribution, a unimodal distribution appears when "general mode" is selected, and a bimodal or multimodal distribution appears when "multiple narrow peak mode" is selected.

**The present disclosure further provides a preparation method for a lithium iron phosphate precursor, comprising the following steps:**
S1. reacting a mixture of an iron source and a phosphoric acid solution, and performing grinding after the completion of the reaction to obtain a product A;
   reacting a mixture of an organic acid solution, a lithium source and a coating source, and obtaining a product B after the completion of the reaction; the preparation order of the product A and the product B is not limited;
S2. grinding a mixture of the product A and the product B to obtain a lithium iron phosphate precursor;
   wherein, the particle size of the lithium iron phosphate precursor is 800 nm-2000 nm.

In S2, preferably, the particle size of the lithium iron phosphate precursor is 800 nm-1800 nm, for example 1000 nm or 1400 nm.

In the present disclosure, the lithium iron phosphate precursor is an amorphous substance or a low-crystallinity iron salt, lithium salt, and mixtures thereof, formed by the accumulation of precipitates. Controlling the particle size of the lithium iron phosphate precursor only changes the average size of the accumulated material. The inventors have serendipitously discovered through research that controlling the particle size of the lithium iron phosphate precursor can form a lithium iron phosphate product with a secondary particle structure in the present disclosure. When the particle size of the lithium iron phosphate precursor is small, it is easier to destroy the secondary particle structure in the subsequent airflow crushing process. Conversely, when the particle size of the lithium iron phosphate precursor is large, subsequent treatments such as air-flow crushing will not easily completely destroy the secondary particle structure thereof.

In the present disclosure, in step S1, the reaction of the mixture of the iron source and the phosphoric acid solution is considered complete when no further gas is generated, as is known to those skilled in the art.

In S1, the reaction is carried out under stirring, and the speed for the stirring is preferably 25-50 Hz, for example 30 Hz. The stirring speed affects the formation of precipitates, thereby affecting the particle size distribution.

In S1, the iron source is known to those skilled in the art. The present disclosure includes a process method in which iron phosphate is first prepared and then lithium iron phosphate is prepared. Therefore, those skilled in the art know that the iron source here does not include iron phosphate.

Preferably, the iron source is a compound containing iron and oxygen elements, more preferably one or more of iron powder, ferric oxide, ferroferric oxide, and iron nitrate, and further more preferably one or more of iron powder, ferric oxide, and ferroferric oxide.

Preferably, the content of iron in the iron powder is 95 wt% or more, more preferably 99 wt% or more, further preferably 99.5 wt% or more, for example 99.7 wt%.

Preferably, the iron powder is one or more of primary reduced iron powder, secondary reduced iron powder, carbonyl reduced iron powder and electrolytic iron powder.

Preferably, the purity of the ferric oxide is 95 wt% or more, more preferably 99 wt% or more, further preferably 99.5 wt% or more.

Preferably, the purity of the ferroferric oxide is 95 wt% or more, more preferably 99 wt% or more, further preferably 99.5 wt% or more.

In S1, preferably, the mesh number of the iron source is 100-1000 mesh, more preferably 200-500 mesh, for example 250 mesh or 300 mesh.

In S1, the phosphoric acid solution generally refers to an aqueous phosphoric acid solution, and the mass percentage concentration of phosphoric acid in the phosphoric acid solution is preferably 20-85%, for example 49%, 59% or 62%.

In S1, the phosphoric acid in the phosphoric acid solution can be conventional phosphoric acid in the art, such as industrial grade phosphoric acid, food grade phosphoric acid, electrical grade phosphoric acid, or electronic grade phosphoric acid. The electrical grade phosphoric acid can be purchased from Guangxi Qinzhou Chengxing Chemical Technology Co., Ltd.

In S1, preferably, the reaction temperature of the mixture of the iron source and the phosphoric acid solution is 20-95 °C, more preferably 30-90 °C, for example, 35 °C, 45 °C, or 55 °C.

In S1, preferably, the mixture of the iron source and the phosphoric acid solution is prepared by adding the iron source to the phosphoric acid solution under stirring.

In S1, preferably, in the mixture of the iron source and the phosphoric acid solution, the molar ratio of iron element to phosphoric acid is (0.94-1.05) : 1, more preferably (0.96-1.0) : 1, for example 0.98 : 1.

In S1, the mixture of the iron source and the phosphoric acid solution further comprises a catalyst. The catalyst exerts a catalytic effect during the reaction process, and after the reaction, it can serve as a dopant to improve the conductivity of the lithium iron phosphate product.

The type of the catalyst is preferably a titanium-based catalyst.

The addition amount of the catalyst is preferably 0.5 wt%-2 wt% of the addition amount of the iron source.

The addition method for the catalyst is preferably to first mix the catalyst with the phosphoric acid solution, and then add the iron source.

In S1, the grinding operation and conditions can be conventional grinding operations, which can be sand milling or ball milling.

Preferably, the grinding is performed using a sand mill. The sand mill is preferably a vertical sand mill, a horizontal sand mill (such as a nano-level horizontal sand mill), a basket sand mill, or a double-cone rod sand mill. The particle size of the grinding beads used in the sand mill is preferably 0.1-3.0 mm, for example, 0.3 mm or 0.4 mm. The grinding beads used in the sand mill are preferably zirconia beads.

In S1, preferably, the viscosity of the product A is 8000-20000 cps, more preferably 10000-20000 cps, for example, 15000 cps.

In S1, preferably, the organic acid solution generally refers to an aqueous organic acid solution, and the mass percentage concentration of the organic acid in the organic acid solution is preferably 5-98%, for example, 55%, 62%, or 72%.

In S1, preferably, the organic acid in the organic acid solution is a carboxylic acid compound and/or ascorbic acid, and the carboxylic acid compound is preferably one or more of formic acid, acetic acid, oxalic acid, citric acid, tartaric acid and malic acid; the organic acid is, for example, citric acid and/or oxalic acid, or malic acid and/or tartaric acid.

In S1, the organic acid may be a high molecular polymer formed by free radical polymerization and copolymerization of unsaturated olefins containing carboxylic acid, such as poly(meth)acrylic acid.

In S1, preferably, the lithium source is one or more of lithium hydroxide monohydrate, lithium carbonate, lithium dihydrogen phosphate, lithium phosphate and lithium acetate, more preferably lithium hydroxide monohydrate and/or lithium acetate; the lithium carbonate is preferably industrial grade lithium carbonate or battery grade lithium carbonate.

In S1, preferably, the molar ratio of the lithium element in the lithium source to the phosphoric acid in the phosphoric acid solution is 0.98-1.05, for example 1.02, 1.03 or 1.04.

In S1, the coating source may be one or more of a carbon material, a metal compound and a conductive polymer. The coating source can complex metal ions, which helps to achieve the special structure of lithium iron phosphate. The carbon material is preferably glucose, a glucose derivative, an organic acid, an organic acid derivative, a phenolic resin, polyethylene, polyethylene glycol, polyvinyl alcohol, a polyvinyl alcohol derivative, polyacrylic acid, a polyacrylic acid derivative, or a heterocyclic polymer or polycondensate containing N or O element.

The glucose derivative preferably comprises at least one of glucose, sucrose, starch and cyclodextrin.

The organic acid preferably comprises at least one of formic acid, acetic acid, oxalic acid, citric acid, tartaric acid and malic acid.

The polyacrylic acid derivative preferably comprises polyacrylate.

The heterocyclic polymer containing N or O element preferably comprises polyvinylpyrrolidone.

The metal compound preferably comprises aluminum oxide and/or zinc stannate.

The conductive polymer preferably comprises one or more of polyaniline, polystyrene thiol, polyacetylene, lithium carbonate and polycarbonate.

In some embodiments, the coating source is lithium carbonate and sucrose.

In some embodiments, the coating source is citric acid and polyacrylic acid.

In some embodiments, the coating source is lithium carbonate, sucrose, and polyvinylpyrrolidone.

In some embodiments, the coating source is a mixture of polyvinyl alcohol, cyclodextrin, and polyethylene glycol.

In S1, preferably, the addition amount of the carbon source accounts for 1%-60% by mass of the iron source, more preferably 5%-50%, further more preferably 10%-40%.

In S1, preferably, the reaction temperature of the mixture of the organic acid, the lithium source and the carbon source is 20-95 °C, more preferably 30-90 °C, for example 35 °C, 40 °C or 45 °C.

In S1, preferably, the mixture of the organic acid, the lithium source and the carbon source is prepared by adding the lithium source and the carbon source to the organic acid solution under stirring.

In S2, the mixture of the product A and the product B is generally prepared by mixing the product A and the product B.

In S2, the grinding operation and conditions may be conventional in the art. The preferred embodiment of the grinding may be the same as S1.

In S2, the time for the grinding may be conventional in the art, and will be affected by factors such as the size of the zirconia beads, the feeding speed, and the wear of the zirconia beads. Specifically, the average particle size of the slurry is controlled, and grinding is stopped when the target particle size is reached, and the corresponding time is not fixed, for example, 6-10 h.

**The present disclosure further provides a lithium iron phosphate precursor, which is prepared by the preparation method for a lithium iron phosphate precursor as described above.**

**The present disclosure further provides a preparation method for a lithium iron phosphate material, comprising the following steps:**
The lithium iron phosphate precursor as described above is sequentially subjected to spray drying, sintering, and crushing.

In the present disclosure, both the synthesis process and the post-treatment process of the lithium iron phosphate precursor have an impact on the formation of the secondary particle structure.

In the spray drying, the inlet temperature may be 280 °C.

In the spray drying, the outlet temperature may be 130 °C.

The conditions for the sintering may be as follows: under a nitrogen atmosphere with 99.999% purity, gradually heating from room temperature to 650 °C-750 °C at a heating rate of 5 °C/min, maintaining at 650 °C-750 °C for 5-20 hours, and then cooling to obtain a sintered product. The higher the sintering temperature, the more easily primary particles sinter together, thereby destroying the secondary particle structure.

The crushing conditions may be as follows: the sintered product is treated by an air-flow crushing device to obtain the target finished lithium iron phosphate cathode material with a D50 particle size of 1.5-3 um.

**The present disclosure further provides a lithium iron phosphate material prepared by the preparation method as described above.**

**The present disclosure further provides the use of the lithium iron phosphate material as described above as a cathode material in a lithium-ion battery.**

Preferred examples of the present disclosure can be obtained by any combination of the above preferred conditions on the basis of conforming to common knowledge in the art.

The reagents and raw materials used in the present disclosure are commercially available.

The positive progress effect of the present disclosure is that:
the lithium iron phosphate material provided by the present disclosure has a special flower cluster structure, and simultaneously possesses good processing properties and cycling performance.

### BRIEF DESCRIPTION OF THE DRAWINGS

FIG. 1 shows a cycling performance diagram of the lithium iron phosphate materials prepared in Example 1 and Comparative examples 1-2.
FIG. 2 shows a microscopic morphology image of the lithium iron phosphate material prepared in Example 1.
FIG. 3 shows a microscopic morphology image of the lithium iron phosphate material prepared in Comparative example 1.
FIG. 4 shows a microscopic morphology image of the lithium iron phosphate material prepared in Comparative example 2.
FIG. 5 shows a size distribution diagram of the lithium iron phosphate material prepared in Example 1.
FIG. 6 shows a size distribution diagram of the lithium iron phosphate material prepared in Comparative example 1.
FIG. 7 shows a size distribution diagram of the lithium iron phosphate material prepared in Comparative example 2.
FIG. 8 shows a transmission electron microscopy morphology image of the lithium iron phosphate material prepared in Example 1.
FIG. 9 shows a transmission electron microscopy morphology image of the lithium iron phosphate material prepared in Comparative example 1.
FIG. 10 shows a transmission electron microscopy morphology image of the lithium iron phosphate material prepared in Comparative example 2.
FIG. 11 shows a transmission electron microscopy size image of the lithium iron phosphate material prepared in Example 1.
FIG. 12 shows a transmission electron microscopy size image of the lithium iron phosphate material prepared in Comparative example 1.
FIG. 13 shows a transmission electron microscopy size image of the lithium iron phosphate material prepared in Comparative example 2.

### DETAILED DESCRIPTION OF EMBODIMENTS

The present disclosure is further illustrated by the following examples, but the present disclosure is not limited to the scope of the described examples. For the experimental methods in which no specific conditions are specified in the following examples, selections are made according to conventional methods and conditions or according to the product instructions.

### Example 1

(1) At a molar ratio of iron element to phosphorus element of 0.96 : 1, 6.895 kg of 85% industrial grade phosphoric acid was added to 5 L of deionized water and diluted under stirring to a concentration of 49%. 3.25 kg of 200-mesh, 99% purity secondary reduced iron powder was slowly added under stirring (at a speed of 30 Hz). The reaction was carried out at 45 °C, during which some gas was generated, and the color of the reactants gradually changed from gray-black to gray-white. When no gas was generated from the reaction, the material was fed into a sand mill for sand grinding. The grinding beads in the sand mill were 0.3 mm zirconia beads. During the sand grinding process, the viscosity of the material gradually increased to 15000 cps, and the color gradually changed to pure white, and product A was obtained.
(2) At a molar ratio of lithium element to phosphorus element of 1.04 : 1, 4 kg of citric acid was dissolved in 3.25 kg of deionized water to form a solution. 2.3 kg of battery-grade lithium carbonate and 1 kg of sucrose were gradually added to the solution under stirring. The reaction was carried out at 40 °C, during which a large amount of gas was generated. The reaction continued until no more gas was generated, a transparent solution was formed, and product B was obtained.
(3) Product B was added to product A and mixed under stirring, the viscosity of the system rapidly decreased to 1000 cps. Sand milling was continued and the time for the grinding was 6-7 hours. When the material was ground to a particle size of D50 of about 1800 nm, the reaction ended, and a slurry with a solid content of 50% was obtained.
(4) The reaction product slurry was spray-dried, sintered, and crushed to obtain a lithium iron phosphate cathode material.

The conditions for spray drying were as follows: an inlet temperature of 280 °C, and an outlet temperature of 110 °C. The conditions for calcination were as follows: under a nitrogen atmosphere with 99.999% purity, gradually heating from room temperature to 650 °C at a heating rate of 5 °C/min, maintaining at 650 °C for 10 hours, and then cooled to obtain a sintered product. The conditions for crushing were as follows: the sintered product was treated by an air-flow crushing device to obtain the target finished lithium iron phosphate material with a flower cluster structure and a particle size D50 of 1.5-3 um.

### Example 2

Compared to Example 1, Example 2 differed in that, in step (2), 3 kg of citric acid and 2 kg of polyacrylic acid were dissolved in 3.25 kg of deionized water to form a solution.

### Example 3

Compared to Example 1, Example 3 differed in that, in step (2), 2.3 kg of battery-grade lithium carbonate, 0.5 kg of sucrose, and 0.3 kg of polyvinylpyrrolidone were gradually added to the solution under stirring.
Comparative example 1
Liquid phase method product
Comparative example 2
Solid phase method product
Comparative example 3

Compared to Example 1, in Comparative example 3, the time for the grinding was 8-10 hours, and the sand grinding particle size was controlled to 200 nm. Due to the reduction in particle size, the slurry viscosity increased, and the solid content of the slurry was adjusted to 35%, with other parameters remaining substantially consistent.

### Comparative example 4

Compared to Example 1, in Comparative example 3, the time for the grinding was 4-5 hours, and the sand milling particle size was controlled to be 2500 nm, with other parameters remaining substantially consistent.

### Effect examples

### I. Electrochemical properties

The lithium iron phosphate materials prepared in the examples and comparative examples were mixed uniformly with carbon black and polyvinylidene fluoride (PVDF) at a mass ratio of 80 : 10 : 10, and then coated onto aluminum foil. After oven-drying, appropriate cathode test pieces were prepared and assembled with lithium metal to form 2032 button-type batteries.

### 1. Discharge specific capacity

Using a charge-discharge tester (LAND CT3002A) 1.1 in a charge-discharge range of 2.0 V-4.2 V, the batteries was charged and discharged at 0.1C rate, charged and discharged at 0.2C rate, charged and discharged at 0.5C rate, charged at 0.5C rate and discharged at 1C rate, charged at 0.5C rate and discharged at 2C rate, charged at 0.5C rate and discharged at 5C rate, charged at 0.5C rate and discharged at 10C rate, and charged at 0.5C rate and discharged at 20C rate, respectively. (Data could be rounded, and the unit of test data was mAh/g)

**Table 1**

| Sample | 0.1C | 0.2C | 0.5C | 1C | 2C | 5C | 10C | 20C |
|---|---|---|---|---|---|---|---|---|
| Example 1 | 161 | 158 | 153 | 147 | 139 | 123 | 108 | 87 |
| Example 2 | 161 | 159 | 153 | 147 | 138 | 124 | 110 | 89 |
| Example 3 | 160 | 158 | 153 | 146 | 137 | 122 | 108 | 89 |
| Comparative example 1 | 161 | 158 | 151 | 144 | 135 | 117 | 101 | 79 |
| Comparative example 2 | 160 | 159 | 154 | 148 | 138 | 119 | 98 | 66 |
| Comparative example 3 | 161 | 158 | 154 | 147 | 139 | 124 | 113 | 35 |
| Comparative example 4 | 153 | 148 | 143 | 134 | 130 | 115 | 89 | 72 |

### 2. Power charge and discharge test

Power charge and discharge tests were performed using a charge and discharge tester (LAND CT3002A) within a voltage range of 2.5 V-3.75 V.

Power rate charge test: The batteries was charged and discharged at 0.1P power, charged and discharged at 0.33P power, charged at 1P power and discharged at 0.33P power, charged at 2P and discharged at 0.33P power, charged at 5P and discharged at 0.33P power, charged at 7P and discharged at 0.33P power, and charged at lOP power and discharged at 0.33P, respectively, and rate charged and discharged cycling tests were perform according to the above steps, with each cycling test performed twice. The test results are shown in Table 2.

Power rate discharge test: The batteries was charged and discharged at 0.1P power, charged and discharged at 0.33P power, charged at 0.33P power and discharged at 1P power, charged at 0.33P and discharged at 2P power, charged at 0.33P and discharged at 5P power, charged at 0.33P and discharged at 7P power, and charged at 0.33P power and discharged at 10P, respectively, and rate charged and discharged cycling tests were performed according to the above steps, with each cycling test performed twice. The test results are shown in Table 3. (Data could be rounded, and the unit of test data was mAh/g)

**Table 2**

| Sample | 0.1P-0.1P | 0.33P-0.33P | 1P-0.33P | 2P-0.33P | 5P-0.33P | 7P-0.33P | 10P-0.33P |
|---|---|---|---|---|---|---|---|
| Example 1 | 157.2 | 148.7 | 146.9 | 144.2 | 130.3 | 118.4 | 96.3 |
| Example 2 | 158 | 148 | 147 | 143 | 131 | 118 | 97 |
| Example 3 | 157 | 147 | 147 | 143 | 130 | 119 | 94 |
| Comparative example 1 | 154.4 | 145.3 | 140.4 | 133.0 | 106.5 | 50.6 | 1.1 |
| Comparative example 2 | 154.3 | 148.5 | 147.3 | 143.2 | 126.3 | 108.3 | 41.4 |
| Comparative example 3 | 159 | 148 | 148 | 145 | 135 | 122 | 101 |
| Comparative example 4 | 150 | 140 | 128 | 114 | 87 | 30 | 0.5 |

**Table 3**

| Sample | 0.1P-0.1P | 0.33P-0.33P | 0.33P-1P | 0.33P-2P | 0.33P-5P | 0.33P-7P | 0.33P-10P |
|---|---|---|---|---|---|---|---|
| Example 1 | 157.2 | 148.7 | 137.9 | 127.1 | 102.9 | 83.9 | 56.4 |
| Example 2 | 158 | 148 | 147 | 126 | 103 | 87 | 59 |
| Example 3 | 157 | 147 | 147 | 126 | 105 | 85 | 62 |
| Comparative example 1 | 154.4 | 145.3 | 131.2 | 119.0 | 94.2 | 56.7 | 0.7 |
| Comparative example 2 | 154.3 | 148.5 | 133.5 | 123.2 | 98.0 | 76.5 | 22.8 |
| Comparative example 3 | 159 | 148 | 147 | 131 | 107 | 92 | 74 |
| Comparative example 4 | 151 | 140 | 129 | 113 | 89 | 28 | 0.1 |

### 3. Cycling performance

The lithium iron phosphate materials prepared in the examples and comparative examples were assembled into pouch cells for testing, with the specific steps as follows:
(i) Preparation of cathode sheet: 94 g of the cathode active material lithium iron phosphate prepared in the examples and comparative examples, 4 g of a binder polyvinylidene fluoride (PVDF), and 4 g of a conductive agent acetylene black were respectively added to 80 g of N-methylpyrrolidone to prepare a uniform cathode slurry. The slurry was coated on both sides of an aluminum foil with a thickness of 16 µm, then oven-dried at 120 °C, roll-pressed, and cut to prepare a 540*43.5 mm cathode sheet in which the weight of the active material lithium iron phosphate was about 7.3 g.

Preparation of anode sheet: 94 g of an anode active component natural graphite, 1.4 g of CMC, and 2 g of conductive carbon black were added to 125 g of deionized water, and 1.6 g of SBR was added to prepare a uniform anode slurry. The slurry was coated on both sides of a copper foil with a thickness of 8 µm, oven-dried at 90 °C, roll-pressed, and cut to prepare an anode sheet with dimensions of 400*44 mm, which contained 3.6 g of natural graphite active material.

### (ii) Assembly of the cell

The aforementioned cathode sheet and anode sheet, and a polyethylene separator were wound to form an electrode core of a square lithium-ion battery. Subsequently, lithium hexafluorophosphate (LiPF₆) was dissolved in a mixed solvent of EC/EMC/DEC = 1 : 1 : 1 at a concentration of 1 mol/L to serve as an electrolyte. This electrolyte was injected into an aluminum battery casing at a dosage of 3.25 g/Ah and sealed to prepare a lithium-ion pouch cell. The discharge capacity of the lithium-ion pouch cell at 0.2C was approximately 1050 mAh.

### (1) Cycling performance test at 25 °C

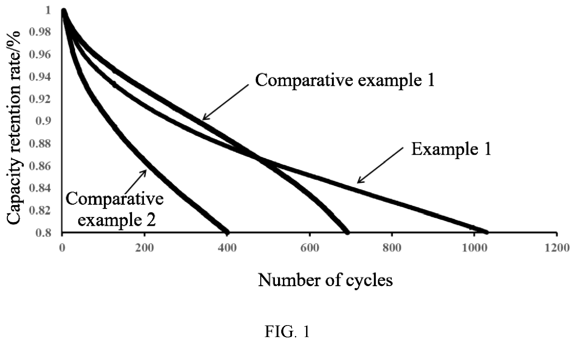

The above lithium-ion pouch cell was subjected to constant current-constant voltage charging at a rate of 1C in a constant temperature chamber at 25 °C, with a cut-off voltage of 4.5 V. After being left to stand for 30 minutes, the cell was discharged from 4.5 V to 2.0 V at a current of 1C. Cycling tests were performed, and the initial discharge capacity was recorded. The test was stopped when the remaining capacity was below 80%, and the number of cycles was recorded. The results are shown in FIG. 1 and Table 4.

When the liquid-phase method product in Comparative example 1 decayed to 80%, the number of cycles was 691. When the solid-phase method product in Comparative example 2 decayed to 80%, the number of cycles was 402. In Comparative example 4, a larger particle size of the phosphate precursor was selected, and when the product decayed to 80%, the number of cycles was only 294. When the samples in Examples 1-3 decayed to 80%, the number of cycles was 1031 or more. It can be seen that the samples in Examples 1-3 have obvious advantages.

**Table 4**

| Sample | Initial specific capacity (mAh/g) | Capacity when decayed to 80% | Number of cycles |
|---|---|---|---|
| Example 1 | 147 | 115.2 | 1031 |
| Example 2 | 146 | 116.8 | 1121 |
| Example 3 | 146 | 116.8 | 1109 |
| Comparative example 1 | 145 | 116 | 691 |
| Comparative example 2 | 143 | 114.4 | 402 |
| Comparative example 3 | 147 | 117.6 | 1189 |
| Comparative example 4 | 138 | 110.4 | 294 |

### (2) Low-temperature capacity retention rate

The above lithium-ion pouch cell was charged and discharged at 23 ± 2 °C using a constant current-constant voltage charging mode at 0.2C. The cell was charged at 0.2C to a limiting voltage of 4.2 V, and then switched to 0.05C constant voltage charging until the charging current was less than or equal to 0.02C current value, at which point the charging was stopped. The temperature of the high (low) temperature constant temperature chamber was adjusted to -10 °C, and the temperature was maintained for 3 h. The cell was discharged to a cut-off voltage of 2 V at 0.2C, and the discharge was terminated. The ratio of the discharge specific capacity to the 0.2C discharge specific capacity at 23 ± 2 °C was calculated.

The data in Table 5 shows that the low-temperature capacity retention rates of Comparative examples 1, 2, and 4 are all inferior than those of the Examples, indicating that the lithium iron phosphate product of the present disclosure has significant advantages in low-temperature applications.

**Table 5**

| Sample | Low-temperature retention rate (-10 °C) |
|---|---|
| Example 1 | 66.2% |
| Example 2 | 67.2% |
| Example 3 | 69.5% |
| Comparative example 1 | 51.3% |
| Comparative example 2 | 48.6% |
| Comparative example 3 | 68.4% |
| Comparative example 4 | 41.7% |

### (3) Self-discharge rate

Conditions: 25 °C, leaving to stand for 30 minutes, charge cut-off voltage of 4.2 V, constant voltage charge cut-off current of 0.05C, and discharge cut-off voltage of 2.0 V. A 0.5C charge-discharge cycle was performed to obtain the discharge capacity. The cell was stored at a high temperature of 55 °C for 7 days. The cell was discharged at a rate of 0.5C to obtain the discharge specific capacity. After storage at 55 °C for 7 days, the discharge specific capacity was measured at 0.5C. The self-discharge rate was calculated as (initial capacity - capacity after storage) divided by the initial capacity.

**Table 6**

| Sample | Self-discharge rate |
|---|---|
| Example 1 | 4.18% |
| Example 2 | 3.58% |
| Example 3 | 3.87% |
| Comparative example 1 | 5.18% |
| Comparative example 2 | 7.12% |
| Comparative example 3 | 4.02% |
| Comparative example 4 | 7.44% |

According to the data in Table 6, it can be seen that the lithium iron phosphate products of Examples 1-3 have a lower self-discharge rate than Comparative examples 1, 2, and 4, and have good capacity retention performance.

In summary, the lithium iron phosphate product of the present disclosure has better electrochemical properties than lithium iron phosphate products prepared by a solid-phase method and liquid-phase method or by using precursors with larger particle sizes.

### II. Processing performance test

Battery slurry preparation: 1200 g of NMP, 75 g of a binder PVDF, and 64 g of carbon black were sequentially added to the lithium iron phosphate materials prepared in the examples and comparative examples, and the mixture was stirred for 5 hours at 2000 r/min under vacuum. The material was filtered through a 200-mesh screen, and the slurry viscosity, solid content, fineness, and electrode sheet compaction density were measured.

**Table 7**

| Sample | Solid content (%) | Fineness (µm) | Viscosity (mPa.S) | Electrode sheet compaction (g/cm³) |
|---|---|---|---|---|
| Example 1 | 60.13% | < 10 | 9137 | 2.46 |
| Example 2 | 57.41 % | < 10 | 7420 | 2.48 |
| Example 3 | 57.60% | < 10 | 5460 | 2.51 |
| Comparative example 1 | 57.34% | < 10 | 14300 | 2.38 |
| Comparative example 2 | 57.17% | < 10 | 11270 | 2.45 |
| Comparative example 3 | 57.14% | < 10 | 28780 | 2.31 |
| Comparative example 4 | 57.01% | < 10 | 3402 | 2.58 |

According to the effect data in Table 7, it can be seen that the lithium iron phosphate product prepared by the present disclosure can maintain a high solid content while having a low viscosity during processing, which is beneficial for reducing the energy consumption of subsequent processes and facilitating subsequent processing.

In summary, the lithium iron phosphate material prepared by the present disclosure can simultaneously possess good cycling performance, capacity retention performance, and processing properties, and the preparation method thereof is simple, green and environmentally friendly, free of emissions of wastewater, waste gas and solid waste, and low in cost. Furthermore, the multiplication of the two indicators of energy density and specific capacity and electrode sheet compaction density shows a positive correlation. The larger the electrode sheet compaction density, the more lithium iron phosphate cathode material can be placed in a unit volume, and the larger the capacity. It can be seen that the lithium iron phosphate material prepared by the present disclosure also has good energy density.

### III. Structural characterization

### 1. Specific surface area measurement

After degassing at 220 °C for 2 hours, an appropriate amount of sample was weighed, and the specific surface area and isothermal adsorption-desorption curve were measured using a specific surface area analyzer (model TB400, manufacture: Beijing Jingwei Gaobo, China).

The test results of the isothermal adsorption-desorption curve showed that the pore size structure of the lithium iron phosphate product of the present disclosure was consistent with the structure of the products prepared in Comparative examples 1 and 2, and both were narrow slit structures, indicating that the materials existed in a stacked manner, and the secondary particles did not have microporous or porous morphology.

As recorded in the data in Table 8, the multi-point BET specific surface area of Example 1 is 11.20 m²/g, the multi-point BET specific surface area of Comparative example 1 (prepared by a liquid-phase method) is 10.94 m²/g, and the multi-point BET specific surface area of Comparative example 2 (prepared by a solid-phase method) is 12.26 m²/g. The specific surface area of Example 1 is at a medium level. Combined with the results of the microscopic morphology analysis, this indicates that the carbon coating of primary particles to form secondary particles can effectively reduce the specific surface area.

**Table 8**

| Sample | Specific surface area | Isothermal adsorption-desorption curve |
|---|---|---|
| Example 1 | 11.20 | Narrow slit structure |
| Example 2 | 10.84 | Narrow slit structure |
| Example 3 | 12.01 | Narrow slit structure |
| Comparative example 1 | 10.94 | Narrow slit structure |
| Comparative example 2 | 12.26 | Narrow slit structure |
| Comparative example 3 | 15.41 | Narrow slit structure |
| Comparative example 4 | 9.82 | Narrow slit structure |

### 2. Microscopic morphology comparison

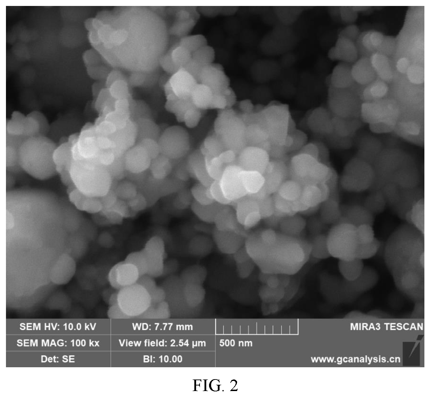

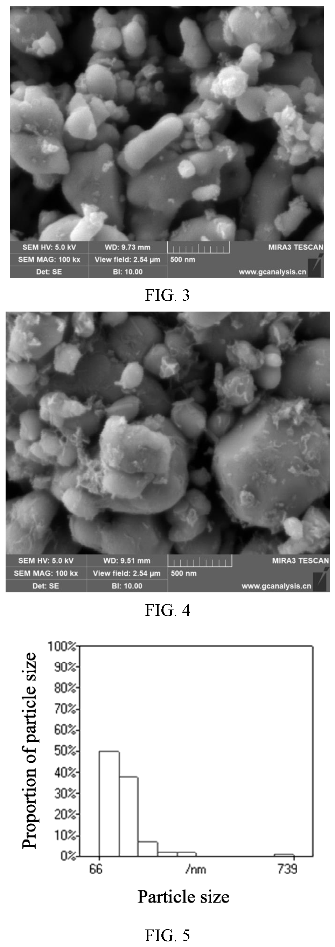

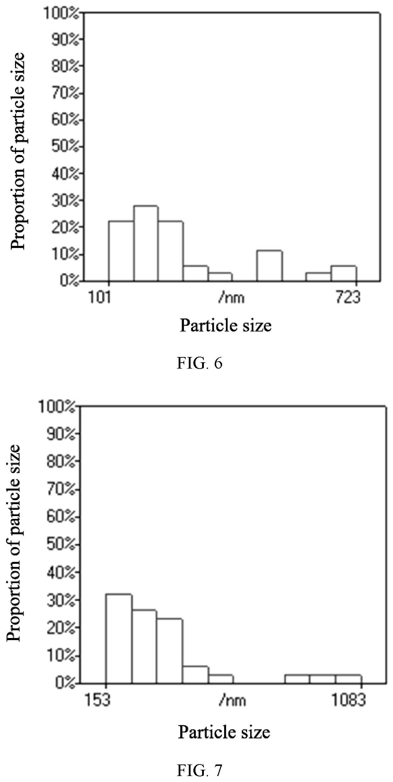

Microscopic morphology tests were performed using a field emission high-resolution scanning electron microscope (model: Tescan Mira 3 XH, manufacturer: Tescan (Czech Republic)). FIG. 2, FIG. 3, and FIG. 4 show microscopic morphology images of the lithium iron phosphate materials prepared in Example 1, Comparative example 1, and Comparative example 2, respectively. FIG. 5, FIG. 6, and FIG. 7 show size distribution diagrams of the lithium iron phosphate materials prepared in Example 1, Comparative example 1, and Comparative example 2, respectively. It can be seen that compared with Comparative examples 1 and 2, Example 1 has a narrower particle size distribution and smaller particles, with primary particles forming secondary particles through a coating layer.

**Table 9**

| Sample | Number of primary particles in secondary particles | Proportion of free primary particles |
|---|---|---|
| Example 1 | 2-300 | < 2% |
| Example 2 | 2-400 | < 3% |
| Example 3 | 2-400 | < 4.5% |
| Comparative example 1 | 2-50 | > 95% |
| Comparative example 2 | 2-100 | > 98% |
| Comparative example 3 | 2-300 | < 4% |
| Comparative example 4 | 2-450 | < 2% |

### 3. XRD and crystallinity measurement

The crystal form and crystallinity of the powder were measured by X-ray diffractometer (model: Ultima, manufacturer: Rigaku Corporation) using a copper target at a wavelength of 0.154 nm.

According to the data in Table 10, it can be seen that the XRD measurement results show that both the examples and the comparative examples are lithium iron phosphate products, and the crystal form is an olivine structure, with the corresponding PDF card number being 40-1499. The XRD crystal forms of the three are consistent, but there are differences in crystallinity (Xc).

**Table 10**

| Sample | Xc |
|---|---|
| Example 1 | 98.0% |
| Example 2 | 98.3% |
| Example 3 | 98.9% |
| Comparative example 1 | 97.9% |
| Comparative example 2 | 96.6% |
| Comparative example 3 | 99.40% |
| Comparative example 4 | 96.20% |

### 4. Raman spectroscopy test

The degree of graphitization of the lithium iron phosphate was measured 3 times using a Raman spectrometer (model: LABRAM HR800, manufacturer: HORIBA (USA)), and the average value was taken.

ID corresponded to disordered carbon, and IG corresponded to ordered graphitized carbon. The smaller the ratio of ID/IG, the higher the degree of graphitization. Combined with the data in Table 11, it could be seen that the lithium iron phosphate material of Example 1 had a lower proportion of disordered carbon and a higher degree of graphitization, which was beneficial for lithium-ion transport.

**Table 11**

| Sample | First time | Second time | Third time | ID/IG |
|---|---|---|---|---|
| Example 1 | 0.9150 | 0.9317 | 0.8878 | 0.9115 |
| Example 2 | 1.0015 | 0.9938 | 0.9722 | 0.9892 |
| Example 3 | 0.9893 | 0.9849 | 0.9817 | 0.9853 |
| Comparative example 1 | 0.9757 | 0.9912 | 0.9589 | 0.9753 |
| Comparative example 2 | 1.0687 | 0.9724 | 0.9815 | 1.0075 |
| Comparative example 3 | 0.9939 | 0.950 | 0.9783 | 0.9743 |
| Comparative example 4 | 1.0393 | 1.0801 | 1.0041 | 1.041 |

### 5. Transmission electron microscopy test

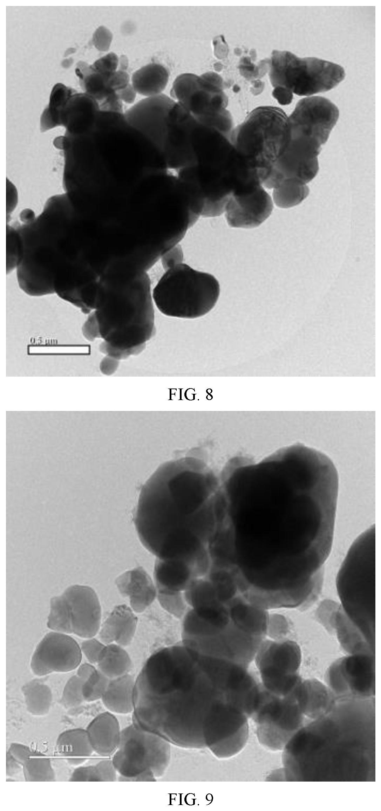

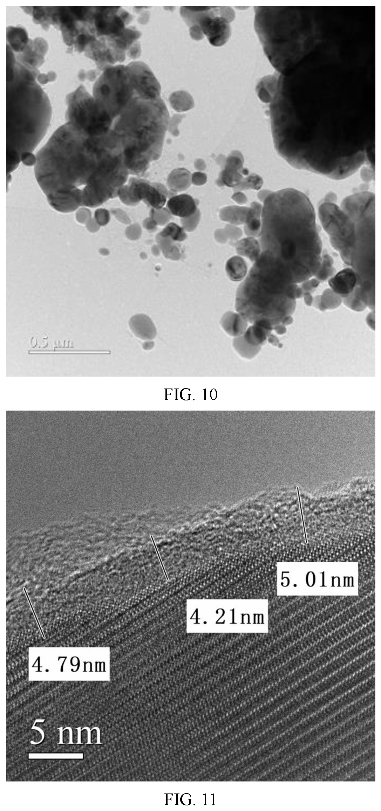

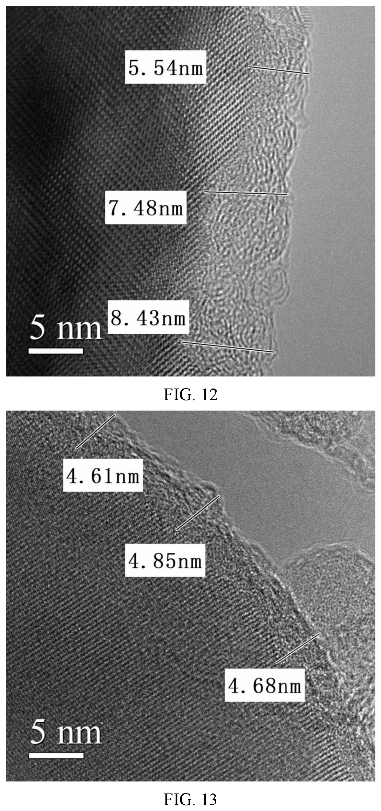

The microscopic morphology of the lithium iron phosphate was characterized by transmission electron microscopy. FIG. 8, FIG. 9, and FIG. 10 show transmission electron microscopy morphology images of the lithium iron phosphate materials prepared in Example 1, Comparative example 1, and Comparative example 2, respectively. FIG. 11, FIG. 12, and FIG. 13 show transmission electron microscopy size images of the lithium iron phosphate materials prepared in Example 1, Comparative example 1, and Comparative example 2, respectively. Combined with the data in Table 12, it could be seen that the carbon layer thicknesses of the lithium iron phosphate products prepared in Examples 1-3 and the lithium iron phosphate products prepared in Comparative examples 1-4 were all between 4 nm and 10 nm, indicating a carbon coating structure.

**Table 12**

| Sample | Carbon layer structure | Thickness of the carbon layer |
|---|---|---|
| Example 1 | Carbon coating | 4-5 nm |
| Example 2 | Carbon coating | 4-5 nm |
| Example 3 | Carbon coating | 4-5 nm |
| Comparative example 1 | Carbon coating | 4-5 nm |
| Comparative example 2 | Carbon coating | 5-9 nm |
| Comparative example 3 | Carbon coating | 4-5 nm |
| Comparative example 4 | Carbon coating | 6-10 nm |

The specific examples described above further detail the objectives, technical solutions, and beneficial effects of the present disclosure. It should be understood that the above descriptions are merely specific examples of the present disclosure and are not intended to limit the present disclosure. Any modifications, equivalent substitutions, improvements, etc., made within the spirit and principles of the present disclosure, shall be included within the scope of protection of the present disclosure.

Although the specific embodiments of the present disclosure have been described above, it will be understood by those skilled in the art that these are merely illustrative, and that various alterations or modifications can be made to these embodiments without departing from the principle and essence of the present disclosure. Therefore, the scope of protection of the present disclosure is defined by the appended claims.

## Claims

1. A lithium iron phosphate material, comprising a flower cluster structure, wherein the flower cluster structure comprises secondary particles, and the secondary particles are formed by agglomerating primary particles by means of a coating layer; the material of the primary particles is lithium iron phosphate.

2. The lithium iron phosphate material according to claim 1, wherein the number of the primary particles contained in the secondary particles is 2-512, preferably 10-450, such as 300, 400, or 450;
and/or, the lithium iron phosphate material further comprises free primary particles, wherein the percentage of the number of the free primary particles to the "total number of the secondary particles and the free primary particles" is 0.1%-5%, preferably 0.1%-4.5%, more preferably 0.1%-3%, and further more preferably 0.1%-2%;
and/or, the thickness of the coating layer is 2-20 nm, for example, 4-5 nm.

3. The lithium iron phosphate material according to claim 1 or 2, wherein the primary particles are nanoparticles, and the particle size range of the primary particles is preferably 30 nm-1000 nm, more preferably 100 nm-800 nm, for example 150 nm or 200 nm;
preferably, the D50 of the primary particles is 100 nm-300 nm, more preferably 200 nm;
and/or, the crystallinity of the primary particles is > 96%;
and/or, the shape of the primary particles is one or more of spherical, ellipsoidal, rod-shaped, flake-shaped and star-shaped;
preferably, the primary particles are ellipsoidal, and the D50 of the primary particles is < 300 nm; the D90 of the primary particles is < 600 nm;
preferably, in the primary particles, the proportion of primary particles with a particle size of 30 nm-140 nm is 50%, the proportion of primary particles with a particle size of 140 nm-200 nm is 37.76%, the proportion of primary particles with a particle size of 200 nm-270 nm is 7.14%, and the proportion of primary particles with a particle size of 270 nm-1000 nm is 5.1%;
and/or, the particle size of the secondary particles satisfies at least one of the following conditions (1)-(4):
(1) the D10 of the secondary particles is ≥ 0.35 µm;
(2) the D50 of the secondary particles is 1-2.2 µm, preferably 1.6 µm;
(3) the D90 of the secondary particles is ≤ 6.50 µm;
(4) the D99 of the secondary particles is <≤ 12.50 µm.

4. A preparation method for a lithium iron phosphate precursor, wherein the preparation method comprises the following steps:
S1. reacting a mixture of an iron source and a phosphoric acid solution, and performing grinding after the completion of the reaction to obtain a product A;
reacting a mixture of an organic acid solution, a lithium source and a coating source, and obtaining a product B after the completion of the reaction; the preparation order of the product A and the product B is not limited;
S2. grinding a mixture of the product A and the product B to obtain a lithium iron phosphate precursor;
wherein, the particle size of the lithium iron phosphate precursor is 800 nm-2000 nm.

5. The preparation method for the lithium iron phosphate precursor according to claim 4, wherein the particle size of the lithium iron phosphate precursor is 800 nm-1800 nm, for example 1000 nm or 1400 nm;
and/or, the coating source is one or more of a carbon material, a metal compound and a conductive polymer;
wherein, the carbon material is preferably glucose, a glucose derivative, an organic acid, an organic acid derivative, a phenolic resin, polyethylene, polyethylene glycol, polyvinyl alcohol, a polyvinyl alcohol derivative, polyacrylic acid, a polyacrylic acid derivative, or a heterocyclic polymer or polycondensate containing N or O element;
the glucose derivative preferably comprises at least one of glucose, sucrose, starch and cyclodextrin;
the organic acid preferably comprises at least one of formic acid, acetic acid, oxalic acid, citric acid, tartaric acid and malic acid;
the polyacrylic acid derivative preferably comprises polyacrylate;
the heterocyclic polymer containing N or O element preferably comprises polyvinylpyrrolidone;
wherein, the metal compound preferably comprises aluminum oxide and/or zinc stannate;
wherein, the conductive polymer preferably comprises one or more of polyaniline, polystyrene thiol, polyacetylene, lithium carbonate and polycarbonate;
preferably, the coating source is lithium carbonate and sucrose;
preferably, the coating source is citric acid and polyacrylic acid;
preferably, the coating source is lithium carbonate, sucrose and polyvinylpyrrolidone.

6. The preparation method for the lithium iron phosphate precursor according to claim 4 or 5, wherein the iron source is a compound containing iron and oxygen elements, preferably one or more of iron powder, ferric oxide, ferroferric oxide and ferric nitrate, more preferably one or more of iron powder, ferric oxide and ferroferric oxide;
preferably, the content of iron in the iron powder is 95 wt% or more, more preferably 99 wt% or more, further preferably 99.5 wt% or more, for example 99.7 wt%,
preferably, the iron powder is one or more of primary reduced iron powder, secondary reduced iron powder, carbonyl reduced iron powder and electrolytic iron powder;
preferably, the purity of the ferric oxide is 95 wt% or more, more preferably 99 wt% or more, further preferably 99.5 wt% or more;
preferably, the purity of the ferroferric oxide is 95 wt% or more, more preferably 99 wt% or more, further preferably 99.5 wt% or more;
and/or, the mesh number of the iron source is 100-1000 mesh, preferably 200-500 mesh, for example 250 mesh or 300 mesh;
and/or, the phosphoric acid solution refers to an aqueous phosphoric acid solution, and the mass percentage concentration of phosphoric acid in the phosphoric acid solution is preferably 20-85%, for example 49%, 59% or 62%;
and/or, the phosphoric acid in the phosphoric acid solution is industrial grade phosphoric acid, food grade phosphoric acid, electrical grade phosphoric acid or electronic grade phosphoric acid;
and/or, the reaction temperature of the mixture of the iron source and the phosphoric acid solution is 20-95 °C, preferably 30-90 °C, for example 35 °C, 45 °C or 55 °C;
and/or, in the mixture of the iron source and the phosphoric acid solution, the molar ratio of iron element to phosphoric acid is (0.94-1.05) : 1, preferably (0.96-1.0) : 1, for example 0.98 : 1;
and/or, the mixture of the iron source and the phosphoric acid solution further comprises a catalyst; the type of the catalyst is preferably a titanium-based catalyst; wherein, the addition amount of the catalyst is preferably 0.5 wt%-2 wt% of the addition amount of the iron source; wherein, the addition method for the catalyst is preferably to first mix the catalyst with the phosphoric acid solution, and then add the iron source;
and/or, the mass percentage concentration of the organic acid in the organic acid solution is 5-98%, for example 55%, 62% or 72%;
and/or, the organic acid in the organic acid solution is a carboxylic acid compound and/or ascorbic acid, and the carboxylic acid compound is preferably one or more of formic acid, acetic acid, oxalic acid, citric acid, tartaric acid and malic acid; the organic acid is, for example, citric acid and/or oxalic acid, or malic acid and/or tartaric acid;
and/or, the organic acid is a high molecular polymer formed by free radical polymerization and copolymerization of unsaturated olefins containing carboxylic acid, for example poly(meth)acrylic acid or polyacrylic acid;
and/or, the lithium source is one or more of lithium hydroxide monohydrate, lithium carbonate, lithium dihydrogen phosphate, lithium phosphate and lithium acetate, preferably lithium hydroxide monohydrate and/or lithium acetate; the lithium carbonate is preferably industrial grade lithium carbonate or battery grade lithium carbonate;
and/or, the molar ratio of the lithium element in the lithium source to the phosphoric acid in the phosphoric acid solution is 0.98-1.05, for example 1.02, 1.03 or 1.04;
and/or, the addition amount of the coating source accounts for 1%-60% by mass of the iron source, preferably 5%-50%, more preferably 10%-40%;
and/or, the reaction temperature of the mixture of the organic acid, the lithium source and the coating source is 20-95 °C, more preferably 30-90 °C, for example 35 °C, 40 °C or 45 °C;
and/or, the mixture of the organic acid, the lithium source and the coating source is prepared by adding the lithium source and the coating source to the organic acid solution under stirring;
and/or, in S1, the reaction is carried out under stirring, and the speed for the stirring is preferably 25-50 Hz, for example 30 Hz;
and/or, in S2, the grinding is sand milling or ball milling; preferably, the grinding is carried out using a sand mill, and the particle size of grinding beads used in the sand mill is preferably 0.1-3.0 mm, for example 0.3 mm or 0.4 mm; the grinding beads used in the sand mill are preferably zirconia beads;
and/or, in S2, the time for the grinding is 6-10 h.

7. A lithium iron phosphate precursor, wherein the lithium iron phosphate precursor is prepared by the preparation method according to at least one of claims 4-6.

8. A preparation method for a lithium iron phosphate material, wherein the preparation method comprises the following steps: sequentially drying, sintering, and crushing the lithium iron phosphate precursor according to claim 7 to obtain the lithium iron phosphate material;
preferably, a method for the drying is spray drying; the inlet temperature for the spray drying is preferably 280 °C; the outlet temperature for the spray drying is preferably 130 °C;
preferably, conditions for the sintering are: under a nitrogen atmosphere with 99.999% purity, gradually heating from room temperature to 650 °C-750 °C at a heating rate of 5 °C/min, maintaining at 650 °C-750 °C for 5-20 hours, and then cooling;
preferably, a method for the crushing is air-flow crushing.

9. A lithium iron phosphate material, wherein the lithium iron phosphate material is prepared by the preparation method according to claim 8.

10. Use of the lithium iron phosphate material according to at least one of claims 1-3 and 9 as a cathode material in a lithium-ion battery.
